(19) Europäisches Patentamt
European Patent Office
Office européen des brevets

(11) EP 1 330 136 B1

(12) # EUROPEAN PATENT SPECIFICATION

(45) Date of publication and mention of the grant of the patent:
**07.03.2012 Bulletin 2012/10**

(21) Application number: **01900378.9**

(22) Date of filing: **12.01.2001**

(51) Int Cl.:
***H04B 1/707*** *(2011.01)*

(86) International application number:
**PCT/CN2001/000018**

(87) International publication number:
**WO 2001/074103 (04.10.2001 Gazette 2001/40)**

(54) **METHOD OF CELL INITIAL SEARCH IN CDMA DIGITAL MOBILE TELECOMMUNICATION SYSTEM**

VERFAHREN ZUR ZELLEN-ANFANGSSUCHE IN EINEM DIGITALEN CDMA-MOBILTELEKOMMUNIKATIONSSYSTEM

PROCEDE DE RECHERCHE INITIALE CELLULAIRE DANS UN SYSTEME DE COMMUNICATION MOBILE NUMERIQUE A ACCES MULTIPLE PAR REPARTITION DE CODE (AMRC)

(84) Designated Contracting States:
**AT BE CH CY DE DK ES FI FR GB GR IE IT LI LU MC NL PT SE TR**

(30) Priority: **27.03.2000 CN 00103548**

(43) Date of publication of application:
**23.07.2003 Bulletin 2003/30**

(73) Proprietor: **China Academy of Telecommunications Technology**
**Haidian District,**
**Beijing 100083 (CN)**

(72) Inventors:
- **LI, Feng**
  **Haidian District,**
  **Beijing 100083 (CN)**
- **XU, Tiezhu**
  **Haidian District,**
  **Beijing 100083 (CN)**
- **HE, Yusong**
  **Haidian District,**
  **Beijing 100083 (CN)**
- **RAN, Xiaolong**
  **Haidian District,**
  **Beijing 100083 (CN)**

(74) Representative: **Mounteney, Simon James et al**
**Marks & Clerk LLP**
**90 Long Acre**
**London**
**WC2E 9RA (GB)**

(56) References cited:
**EP-A2- 0 852 430** **CN-A- 1 195 956**
**CN-A- 1 226 127**

- **"Universal Mobile Telecommunications System (UMTS); Physical Layer Procedures (TDD) (3G TS 25.224 version 3.1.1 Release 1999); ETSI TS 125 224" ETSI STANDARDS, LIS, SOPHIA ANTIPOLIS CEDEX, FRANCE, vol. 3-R1, no. V3.1.1, 1 January 2000 (2000-01-01), XP014008506 ISSN: 0000-0001**

EP 1 330 136 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

## Description

### Field of the Technology

The present invention relates generally to mobile communication technology, and more particularly to a cell initial search method of user equipment (UE) in a CDMA digital cellular mobile communication system with training sequence (pilot).

### Background of the Invention

In a digital cellular mobile communication system, after an UE is turned on, a cell initial search is made first. Purposes of the cell initial search are to select a suitable working frequency and to obtain downlink synchronization between the UE and a base station at this working frequency. Only in this way, the UE can correctly receive message sent by the base station.

Additionally, in a real digital cellular mobile communication system, the main clock in UE and a base station is completely independent. Even if both are working at same working frequency, there must be a carrier deviation (or called frequency difference, frequency deviation) between them. During demodulation, if UE cannot implement relative accurate carrier deviation recovery (or said calibration, correction), then there will be remaining carrier component in the baseband signal, this will affect processing of the baseband signal, further cause code error and make the UE cannot correctly receive information sent by a base station.

Therefore, for a digital cellular mobile communication system, UE must perform the following works during cell initial search: working frequency locking, obtaining downlink synchronization with the base station at the locked working frequency, correcting carrier frequency deviation.

Naturally, during a real cell initial search, because the independent main clocks of a base station and UE drift along with time, so carrier frequency deviation also must be traced at the same time.

In a real CDMA cellular mobile communication system, in general the downlink synchronization is performed by a pilot channel. The convention implementation of a downlink synchronization are: first, locking at a working frequency, then solving the correlation between the whole data frame received and a preset pilot sequence (training sequence), continuously sliding the working frequency for solving correlation until the correlation peak is greater than a preset threshold, then the downlink synchronization is performed at this working frequency. The working frequency where the correlation peak is located is the UE receiving position.

In any CDMA cellular mobile communication system, it is needed to perform correlation operation for synchronization. Nevertheless, the conventional correlation operation has the following limitation. As the correlation operation is slid at each chip or even fractional chip level of the whole data frame, so the operation volume is huge and a long calculation time is needed. Besides, as the correlation operation is taken for whole data frame, it increases probability of error decision, especially, in the Time Division Duplex CDMA (TDD-CMDA) system. In a TDD-CDMA system, suppose near UE A there is another UE B is in conversation. As the distance between UE A and B is short, so the UE A receives a more powerful signal power sent by UE B than a signal power sent by the base station. This leads a mistaken decision about the correlation peak position that is not the real receiving position of the UE, and produces mistaken downlink synchronization information.

In general, carrier frequency deviation is corrected at a digital demodulator (for general situation, a certain degree of carrier deviation will not affect downlink synchronization, but will affect the demodulated information). An analogy phase-locked circuit, which is mature in technology, is used in convention. Disadvantages of this solution are: it is difficult to take account of performance and capture bandwidth at the same time, and it is sensitive to carrier jitter and it is complex for hardware circuit.

In the China Patent CN 97115151.2 named "a method and device for carrier recovery and compensation in a frequency spread communication system", a digital correction method for carrier frequency deviation has been proposed. Nevertheless, the method makes an optimal estimation under a channel model without noise and multipath interference, and is not suitable for a cellular mobile communication system.

"Universal Mobile Telecommunications System (UMTS); Physical Layer Procedures (TDD) (3G TS 25.224 version 3.1.1 Release 1999); ETSI TS 125 224" discloses initial cell search, which is carried out in three steps: Step 1: slot synchronization, during which the UE uses the primary synchronization code $c_p$ to acquire slot synchronization to the strongest cell; Step 2: frame synchronization and code-group identification, during which the UE uses the modulated Secondary Synchronization codes to find frame synchronization and identify one out of 32 code groups; Step 3: scrambling code identification, during which the UE determines the exact basic midamble code and the accompanying scrambling code used by the found cell.

EP 0852430 A2 discloses an initial synchronization method for a DS-CDMA inter base station asynchronous cellular system, which comprises: receiving a control signal in the control channel of a base station, correlating the control signal with the specific short code to produce a correlation signal, determining a long code synchronization timing of the control signal based on the correlation signal, detecting correlation between the control signal and segments of the synthesized spread code sequences, and identifying which of the different long codes synthesizes said one of the synthesized spread code sequence.

## Summary of the Invention

Purpose of the invention is to provide a cell initial search method for a CDMA digital mobile communication system. The method improves the conventional cell initial search method, i.e. proposes a solution for downlink synchronization and carrier deviation correction during cell initial search. With this solution UE can rapidly and accurately perform downlink synchronization with base station and has a better effect for carrier deviation correction.

An implementation of the invention can be as follows:

A cell initial search method for a digital mobile communication system with CDMA is used for a user equipment correctly receiving information sent by a base station. The method includes that the user equipment selects a working frequency;

the said: "obtaining downlink synchronization with the base station at the working frequency point" includes that:

by using a power characteristic window value method based on training sequence, a range of downlink training sequence timeslot is decided first; and

in the range by calculating correlation of received data and training sequence, an accurate receiving position of the user equipment is obtained.;

the said: "the power characteristic window value method based on training sequence" comprises:

in a base station frame structure, increasing transmitting power of synchronization symbols in the downlink pilot sequence timeslot (DwPTS), and there is no transmitting power on protected symbols located before and after the synchronization symbols in the DwPTS; and

when receiving, user equipment first searches power characteristic window values of the DwPTS, after a position range of the synchronization symbols has been discovered, the correlation operation is only made near the position;

the said: "searching power characteristic window values of the DwPTS to discover a position range of the synchronization symbols", includes that:

UE locks a working frequency first, then receives a data frame; calculate each synchronization symbol power in the DwPTS; calculate power characteristic window values at each synchronization symbol position; calculate average power characteristic window value for the whole data frame; search minimum one of power characteristic window values at all synchronization symbols position of the whole data frame received; decide whether the ratio of average power characteristic window value and minimum power characteristic window value is greater than a threshold value, if it is, then position of the minimum power characteristic window value is the beginning position of the DwPTS; solve correlation near the beginning position to obtain an accurate receiving beginning point and end the downlink synchronization;

the said: "calculate power characteristic window value at each synchronization symbol position" is that on the whole data frame received with symbol level sliding, calculate each position power characteristic window value *R(i)* at each position with the following formula:

$$R_i = \left( \sum_{k=i}^{i+N-1} P(k) + \sum_{k=i+N+M}^{i+2N+M-1} P(k) \right) / \sum_{k=i+N}^{i+N+M-1} P(k)$$

wherein *i* represents a real receiving position, *P(k)* represents power value of each symbol, *N* and *M* are characteristic window parameters.

The said: "calculate each synchronization symbol power" is that first suppose the receiving moment is a synchronization symbol beginning point, then add powers of all chips belonging to the symbol to obtain the power of each synchronization symbol.

The said: "calculate power characteristic window value at each synchronization symbol position" is that based on each chip power with chip level sliding, calculate power characteristic window value at each position.

The method further includes:

tracing carrier deviation between the user equipment and the base station by the user equipment, and correcting the carrier deviation in a digital demodulator of the user equipment;
wherein correcting the carrier deviation in a digital demodulator of the user equipment comprises:

estimating the carrier deviation by software, and adjusting hardware by using a decision and feedback method; and
by using a carrier deviation correction method based on joint detection, suppressing multipath and multiple access interference and correcting the carrier deviation to a range required by baseband demodulation.

The said: "estimating the carrier deviation by software, and adjusting hardware by using a decision and feedback method" includes: estimating carrier deviation of each data frame by software, calculating adjustment value for hardware, adjusting automatic frequency control hardware in the digital demodulator with the calculated adjustment value.

The following formula is used to estimate frequency difference of each data frame by software:

$$Ae^{-jk\alpha}\frac{1}{L}\sum_{L}[I(i)+jQ(i)]*[I(i+K)+jQ(i+K)]*,$$

wherein $\alpha$ represents an estimated frequency difference, *I* and *Q* are orthogonal demodulation signals, and *L* is a statistic length.

The following formula is used to calculate hardware adjustment value, i.e. for calculating adjustment value of a carrier frequency difference:

$$fa(n) = fe(n) * coef_k(n),$$

wherein *fe(n)* is the estimated frequency difference for the $n^{th}$ data frame received, the range of adjustment coefficient $coef_k$ is between 0 ~ 1, and when *k* is greater, select a smaller $coef_k$.

The said: "by using a carrier deviation correction method based on joint detection, suppressing multipath and multiple access interference and correcting the carrier deviation to a range required by baseband demodulation" includes: a training sequence midamble of data burst is inserted into each frame; the user equipment suppresses multipath and multiple access interference with joint detection technology, and symbols near the training sequence midamble is demodulated; with carrier frequency difference information included in these symbols, automatic frequency control hardware is adjusted.

The said: "suppress multipath and multiple access interference with joint detection technology, and symbols near the training sequence midamble is demodulated" further includes: demodulate data with the joint detection technology and obtain P characters before and after the training sequence midamble, and recorded as *X(1) ... X(P)* and *Y (1) ... Y(P)*, respectively; calculate $Xi(n)=X(n)/Xj(n)$, $Yi(n) = Y(n)/Yj(n)$, wherein $Xj(n) = Yj(n) = \pm\pi/4, \pm 3\pi/4$; obtain carrier frequency difference direction by formula: $Z = \sum_{n=1}^{P} Yi(n) / Xi(n)$; set an adjustment step length based on the calculated carrier frequency difference direction; adjust automatic frequency control hardware with the adjustment step length and the obtained frequency difference direction.

The said: "estimating the carrier deviation by software, and adjusting hardware by using a decision and feedback method" includes:

a) setting frame number *n* = 0, receiving a data frame;
b) estimating carrier frequency deviation of the data frame by software;
c) calculating a adjustment value of carrier frequency deviation, i.e. calculating hardware adjustment value;

d) adjusting automatic frequency control hardware according to the calculated hardware adjustment value, doing $n = n+1$, deciding whether $n$ being greater than a preset number of adjustment frames $Q$, if not being so, receiving next data frame and going to step b, otherwise ending.

The said: "by using a carrier deviation correction method based on joint detection, suppressing multipath and multiple access interference and correcting the carrier deviation to a range required by baseband demodulation" includes:

e) receiving $m$ data frames;
f) demodulating the $m$ data frames received with joint detection technology, i.e. demodulating data symbols near a training sequence midamble and getting $P$ symbols before and after the training sequence midamble, respectively;
g) calculating carrier frequency deviation direction on the $P$ symbols before and after the training sequence midamble of $m$ data frames, respectively;
h) setting an adjustment step length for automatic frequency control hardware, according to the calculated carrier frequency deviation direction;
i) adjusting automatic frequency control hardware with the adjustment step length, according to the frequency carrier deviation direction obtained.

The steps e to i are repeated.

The invention is a cell initial search method for a CDMA mobile communication system, and is a downlink synchronization method for a CDMA mobile communication system. The method implements locking a working frequency point during a cell initial search, obtaining downlink synchronization with the base station and recovering carrier frequency difference between the base station and user equipment. The method of locking a working frequency point and obtaining downlink synchronization with the base station is: first, deciding a rough range of the training sequence by using a power characteristic window value method based on training sequence, then solving correlation of a data frame received and the training sequence to obtain the accurate receiving position and to complete a downlink synchronization with the base station. The method of recovering carrier frequency difference between the base station and user equipment is a carrier frequency difference correction method based on joint detection technology. Implementing several steps of the two methods above (or any one of them) will implement a cell initial search of the invention and user equipment completes downlink synchronization rapidly and accurately.

The method of the invention is a cell initial search method mainly pointed to mobile communication system with training sequence.

## Brief Description of the Drawings

Fig.1 is a diagram of cell initial search.

Fig.2 is a frame structure diagram required when using the power characteristic window value method.

Firure3 is a flowchart implementing the power characteristic window value method.

Fig.4 is a flowchart for correcting an initial larger frequency difference range to a smaller frequency difference range in the correction of carrier frequency difference.

Fig.5 is a flowchart for correcting frequency difference to a range required by baseband demodulation in the correction of carrier frequency difference.

## Embodiments of the Invention

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

Fig.1 shows basic steps of a cell initial search procedure from starting to ending in a cellular mobile communication system, by taking a Time Division - Synchronized Code Division Multiple Access (TD-SCDMA) system as an example. Step1 searches a rough position range of DwPTS by using the power characteristic window value method of the invention, and defines the working frequency point. Step2 searches accurate receiving position by using conventional solving correlation method in the position range defined by step 1, and obtains accurate receiving position. Step3 start to recover carrier frequency difference based on the joint detection method of carrier frequency difference correction used in the invention. In step4, information in the broadcast channel (BCCH) can be monitored.

Fig.2 shows a frame structure required when using the power characteristic window value method for implementing downlink synchronization. In the invention, two training sequences are defined in a frame structure of TD-SCDMA system: an independent DwPTS 5 and a midamble in burst data TD0 ..... TDn, TU0 ..... Tun. The two training sequences have different function during a cell initial search. The DwPTS 5 occupies an independent timeslot including N GP (guard) symbols, M SYNC (synchronization) symbols and again N GP symbols. Before and after the midamble, there are P data symbols, respectively, and the two data symbols and the midamble together occupy a timeslot. The SYNC symbol is a code selected from a set of orthogonal codes. The code can be obtained by solving correlation, but the operation must be made over whole data frame and the set of orthogonal codes, so the operation volume is very large.

In the downlink synchronization method of the invention, let base station raise transmitting power of SYNC symbols but there is no transmitting power at GP symbols. In this way when receiving, user equipment can first search the power characteristic window value of the DwPTS, and discovers a rough position range of the SYNC symbols, then solves correlation only near the position range. Therefore, the downlink synchronization time will be greatly shrunk and probability of decision error will be decreased.

Fig.3 shows procedure for searching rough position range of DwPTS. Taking TD-SCDMA system as an example, the procedure starts searching with the characteristic window method and ends with discovering the rough position range of DwPTS or without finding the rough position range of DwPTS. In the TD-SCDMA system, set number of guard symbols $N = 2$, number of SYNC symbols $M = 4$ and each data frame time length is 5ms.

In step6, first user equipment is locked at a working frequency point, which should be a possible frequency point of a mobile communication system, and then the user equipment receives a complete data frame (e.g. 5ms + $\Delta$ ms). In step7, calculate each symbol power P, i.e. first suppose that the receiving moment is the starting point of a symbol, then add power of all chips belong to the symbol to obtain the symbol power. Although, in real the receiving moment cannot be just the starting point of a symbol, but purpose of using power characteristic window value method is to obtain a rough position range of SYNC symbol. Therefore, there is no so much affect to the result.

In the following formula (1), $R_t$ is the power characteristic window value for each position, $i$ represents the real receiving position, $P(k)$ represents each symbol power, $M$ and $N$ are parameters of the characteristic window shape.

$$R_i = \left( \sum_{k=i}^{i+N-1} P(k) + \sum_{k=i+N+M}^{i+2N+M-1} P(k) \right) / \sum_{k=i+N}^{i+N+M-1} P(k) \qquad \cdots\cdots \quad (1)$$

In step8, calculate power characteristic window value (ratio) on each symbol position. For a receiveing data frame sliding in symbol level and on each position taking the TD-SCDMA frame structure $N = 2$, $M = 4$, calculate power characteristic window value with the formula $((P_i + P_{i+1}) + (P_{i+6} + P_{i+7}))/(P_{i+2} + P_{i+3} + P_{i+4} + P_{i+5})$.

Practically, it need not take each symbol power, but take each chip power. Sliding in chip level can obtain more accurate result, but it charges a larger operation volume.

In step 9, calculate average power characteristic window value (ratio) on a frame: *Raver,* with the formula:

$$Raver = \sum_{i=1}^{Q} R(i),$$

Wherein $R(i)$ is a power characteristic window value on each receiving position, $Q$ represents number of receiving position for a frame.

In step 10, search the minimum one of power characteristic window value in a receiving data frame: *Rmin,* $Rmin = min(R(i))$; and calculate *Raver* / *Rmin,* i.e. average power characteristic window value/ minimum power characteristic window value, to see whether *Raver* / *Rmin* is much more greater than a threshold value. If *Raver* / *Rmin* is not greater than the threshold, then the DwPTS has not been found. If *Raver* / *Rmin* is greater than the threshold, then the position of the minimum value of power characteristic window is the DwPTS starting position. Then, solve correlation near the obtained starting position of the DwPTS to obtain an accurate receiving starting point and perform downlink synchronization.

In the invention, correcting carrier deviation is implemented by two big steps, which are shown in Fig. 4 and 5, respectively. In Fig.4, the first big step, a frequency difference is estimated by software and a decision and feedback mechanism for hardware adjustment is introduced. In the first big step, frequency difference is recovered from an initial larger value to a smaller range; for example, when using a crystal oscillator with accuracy 3ppm and working frequency range about 2G, the initial value can be considered as about 6 kHz. In Fig.5, the second big step, by mainly using joint detection technology to suppress multipath and multiple access interference, the smaller frequency difference (for example, about 1kHz) will be corrected to a range required by baseband demodulation in order to obtain a more accurate frequency difference information for guiding hardware adjustment.

Fig.4 is an uninterrupted procedure starting from recovering carrier frequency difference until higher frequency accuracy obtained by using midamble. During this procedure, the frequency difference is estimated by software, the automatic frequency control (AFC) is made for hardware by a decision and feedback mechanism. The procedure corrects frequency difference from an initial larger value to a smaller range.

Estimating frequency difference by software is also a software compensation process. If only using the software compensation without adjustment for hardware, each time the estimation must be accurate. In addition, under wireless channel the software estimation method is not estimation without tolerance. Therefore, only with software compensation, the effect is not good enough. On the other hand, although under wireless channel the software estimation is not very accurate, but the estimated frequency difference direction is reliable, especially in an average of multiple frames. Therefore, the software estimation can be used to guide the AFC hardware adjustment, to satisfy the requirement of the first big step. The specific steps are as follow.

Before step 11, set frame number $n = 0$, and step 11 receives a data frame.

Step 12, estimate frequency difference of each data frame by software with formula (2):

$$Ae^{-jk\alpha}\frac{1}{L}\sum_{L}[I(i)+jQ(i)]*[I(i+K)+jQ(i+K)]* \qquad \cdots\cdots \quad (2)$$

Wherein $\alpha$ represents an estimated frequency difference, $I$ and $Q$ are orthogonal demodulation signal, $L$ is a statistic length.

Step13, with formula (3) calculate adjustment value of carrier frequency difference, i.e. hardware adjustment value:

$$fa(n) = fe(n) * coef_k(n) \qquad \cdots\cdots \quad (3)$$

Wherein $fe(n)$ is an estimated frequency difference, i.e. $\alpha$ for the $n^{th}$ data frame received; adjustment coefficient $coef_k$ ranges between 0 ~ 1, the selection principle is that greater $k$ takes smaller $coef_k$. For example, a received data frame can be divided into $k1, k2, ..., kn$ sections; when there are $k1<k2< ... <kn$, take $coef_{k1.} > coef_{k2} >...> coef_{kn}$.

Stepl4, adjust hardware AFC control according to the calculated hardware adjustment value, do $n = n+1$, decide whether $n > Q$? When $n$ is not greater than $Q$ ($Q$ is a preset number of adjustment frames), repeat steps 11 to 14 until $n > Q$, then the first big step is ended and go to using midamble for higher frequency accuracy.

In practice, it also can be feedback without each data frame, but with multiple frames. The feedback in this case is interadjusting between software and hardware, i.e. first calculate frequency difference with software, then adjust hardware guided by the calculated frequency difference; after hardware has been adjusted, software estimates frequency difference again; repeat the procedure until a preset number of times.

Fig.5 shows a procedure that deploys midamble to obtain higher frequency accuracy. Based on joint detection, a smaller frequency deviation is corrected into a range, which can be borne by the baseband demodulation. In a TD-SCDMA system, using joint detection technology means inserting a training sequence (midamble) to each frame for estimating real channel response. In this way, user equipment can suppress multipath and multiple access interference with joint detection technology, demodulates data symbols near the training sequence midamble, and guides adjustment of AFC by using frequency deviation information involved in these symbols. Specific steps are as following:

Step15, receive m data frames.

Stepl6, demodulate the m data frames with joint detection technology, i.e. demodulate data symbols near the training sequence midamble and obtain $P$ symbols before and after the training sequence midamble, respectively, which can be named as X(1) ... X(P) and Y(1) ... Y(P), respectively.

Step 17, calculate, respectively, the frequency deviation direction by using formula (4) on the P symbols before and after the training sequence midamble of the *m* data frames:

$$Xi(n) = X(n)/Xj(n)$$
$$Yi(n) = Y(n)/Yj(n) \quad \cdots\cdots \quad (4)$$

Wherein $Xj(n) = Yj(n) = \pm\pi/4, \pm 3\pi/4$;
Then use formula (5) to obtain a carrier frequency difference:

$$Z = \sum_{n=1}^{P} Yi(n) / Xi(n) \quad \cdots\cdots \quad (5).$$

Step 18, set adjustment step length (STEP Hz) of AFC hardware, according to the calculated frequency difference direction.

Step19, according to the frequency difference direction obtained in step17, adjust AFC hardware with the step length STEP.

Steps 15 to 19 can be repeated. Along with a corrected frequency difference decreases gradually, more data symbols near the training sequence midamble can be taken to obtain more frequency difference information, and the adjustment step length of AFC hardware can be decreased gradually.
The method of the invention is a cell initial search method based on having training sequence system and can be used in a CDMA mobile communication system. A CDMA communication system using joint detection technology can use the invention, which is a method for correcting carrier deviation based on joint detection, to estimate carrier deviation. In a space wireless channel environment, the method can have a well effect.
Although, the invention, a downlink synchronization and carrier deviation correction method, is designed based on a TD-SCDMA system, which is proposed by CWTS (China Wireless Telecommunication Standardization) and is one of the RTT (Radio Transmission Technology) of International IMT-2000, but it can be fully used on other digital cellular mobile communication systems after an adequate update.

## Claims

1. A cell initial search method for a CDMA digital mobile communication system, for a user equipment receiving information sent by a base station, comprising:

    selecting a working frequency point by the user equipment and obtaining downlink synchronization with the base station at the working frequency point; it is **characterized** that:

        wherein
        obtaining downlink synchronization with the base station at the working frequency point comprises:

            deciding (1) a range of downlink training sequence timeslot by using a power characteristic window value method based on training sequence; and
            obtaining (2) accurate receiving position for the user equipment by calculating correlation of received data and training sequence in the range;

        wherein the power characteristic window value method based on training sequence comprises:

            increasing transmitting power of synchronization symbols in a downlink pilot sequence timeslot, DwPTS, of a base station data frame, and there is no transmitting power on protected symbols located before and after the synchronization symbols in the DwPTS; and
            searching power characteristic window values of the DwPTS first by user equipment, during receiving, and after having been discovered a position range of the synchronization symbols, making correlation calculation only near the position;

wherein searching power characteristic window values of the DwPTS to discover a position range of the synchronization symbols comprises:

locking (6) a working frequency point by the user equipment first, and receiving a data frame;
calculating (7) each synchronization symbol power in the DwPTS;
calculating (8) power characteristic window values at each synchronization symbol position;
calculating (9) average power characteristic window value over the complete data frame;
searching (10) minimum one of power characteristic window values at all synchronization symbols position of the receiving data frame;
deciding (10) whether the ratio of average power characteristic window value and minimum power characteristic window value being greater than a threshold value, if it being so, then the position of the minimum power characteristic window value being the beginning position of the DwPTS; and
solving correlation near the beginning position to obtain an accurate receiving beginning point and ending downlink synchronization;

wherein calculating power characteristic window values at each synchronization symbol position comprises:

sliding with symbol level on the receiving data frame, and calculating each position power characteristic window value *R(i)* at each position with a following formula:

$$R_i = \Big(\sum_{k=i}^{i+N-1} P(k) + \sum_{k=i+N+M}^{i+2N+M-1} P(k)\Big) / \sum_{k=i+N}^{i+N+M-1} P(k),$$

where i represents a real receiving position, P(k) represents a power value of each synchronization symbol, *N* and *M* are characteristic window parameters.

**2.** The method according to Claim1, wherein calculating each synchronization symbol power comprises:

supposing the receiving moment being a synchronization symbol beginning point first, adding powers of all chips belonging to the synchronization symbol, and getting the power of the synchronization symbol.

**3.** The method according to Claim1, wherein calculating power characteristic window values at each synchronization symbol position comprises:

sliding with chip level based on each chip power, and calculating the power characteristic window value at each position.

**4.** The method according to Claim 1, further comprising:

tracing carrier deviation between the user equipment and the base station by the user equipment, and correcting the carrier deviation in a digital demodulator of the user equipment;
wherein correcting the carrier deviation in a digital demodulator of the user equipment comprises:

estimating the carrier deviation by software, and adjusting hardware by using a decision and feedback method; and
by using a carrier deviation correction method based on joint detection, suppressing (3) multipath and multiple access interference and correcting the carrier deviation to a range required by baseband demodulation.

**5.** The method according to Claim4, wherein estimating the carrier deviation by software, and adjusting hardware by using a decision and feedback method comprises:

estimating the carrier deviation of each data frame by software;
calculating a adjustment value for hardware; and
adjusting automatic frequency control, AFC, hardware in the digital demodulator with the calculated adjustment value.

**6.** The method according to Claim5, wherein using a following formula to estimate the carrier deviation of each data frame:

$$Ae^{-jk\alpha}\frac{1}{L}\sum_{L}[I(i)+jQ(i)]^{*}[I(i+K)+jQ(i+K)]^{*},$$

wherein $\alpha$ represents the estimated frequency deviation, *I* and *Q* are orthogonal demodulation signals, and *L* is a statistic length.

**7.** The method according to Claim5, wherein using a following formula to calculate an adjustment value for hardware:

$$fa(n) = fe(n) * coef_k(n),$$

wherein $fe(n)$ is the estimated carrier frequency deviation for the $n^{th}$ receiving data frame, the range of adjustment coefficient $coef_k$ is between 0 ~ 1, and when *k* is greater, select a smaller $coef_k$.

**8.** The method according to Claim 4, wherein by using a carrier deviation correction method based on joint detection, suppressing multipath and multiple access interference and correcting the carrier deviation to a range required by baseband demodulation comprises:

inserting a training sequence midamble of data burst into each data frame for estimating real channel response;
suppressing multipath and multiple access interference with joint detection technology by the user equipment, and demodulating symbols near the training sequence midamble;
adjusting automatic frequency control hardware with the carrier deviation information included in these symbols.

**9.** The method according to Claim8, wherein suppressing multipath and multiple access interference with joint detection technology and demodulating symbols near the training sequence midamble comprises:

demodulating receiving data with joint detection technology, and getting *P* characters before and after the training sequence midamble, and recorded as $X(1) \ldots X(P)$ and $Y(1) \ldots Y(P)$, respectively;
calculating $Xi(n) = X(n)/Xj(n)$, $Yi(n) = Y(n) / Yj(n)$, respectively, wherein $Xj(n) = Yj(n) = \pm\pi/4$ or $\pm 3\pi/4$;
getting carrier deviation direction by the formula:

$$Z = \sum_{n=1}^{P} Yi(n) / Xi(n);$$

setting an adjustment step length of automatic frequency control hardware based on the calculated carrier frequency deviation direction; and
adjusting automatic frequency control hardware with the adjustment step length according to the carrier frequency deviation direction.

**10.** The method according to Claim4, wherein estimating the carrier deviation by software, and adjusting hardware by using a decision and feedback method comprises:

a) setting (11) frame number n = 0, receiving a data frame;
b) estimating (12) carrier frequency deviation of the data frame by software;
c) calculating (13) a adjustment value of carrier frequency deviation, i.e. calculating hardware adjustment value;

d) adjusting (14) automatic frequency control hardware according to the calculated hardware adjustment value, doing $n = n+1$, deciding whether $n$ being greater than a preset number of adjustment frames $Q$, if not being so, receiving next data frame and going to step b, otherwise ending.

**11.** The method according to Claim4 or 10, wherein by using a carrier deviation correction method based on joint detection, suppressing multipath and multiple access interference and correcting the carrier deviation to a range required by baseband demodulation comprises:

e) receiving (15) $m$ data frames;
f) demodulating (16) the $m$ data frames received with joint detection technology, i.e. demodulating data symbols near a training sequence midamble and getting $P$ symbols before and after the training sequence midamble, respectively;
g) calculating (17) carrier frequency deviation direction on the $P$ symbols before and after the training sequence midamble of $m$ data frames, respectively;
h) setting (18) an adjustment step length for automatic frequency control hardware, according to the calculated carrier frequency deviation direction;
i) adjusting (19) automatic frequency control hardware with the adjustment step length, according to the frequency carrier deviation direction obtained.

**12.** The method according to Claim11, further comprises repeating steps e to i.

**Patentansprüche**

**1.** Zellenanfangssuchverfahren für ein digitales CDMA-Mobilkommunikationssystem, und zwar für eine Teilnehmereinrichtung, die durch eine Basisstation gesendete Information empfängt, umfassend:

Auswählen eines Arbeitsfrequenzpunktes durch die Teilnekunereinrichtung und Erlangen von Abwärtsstreckensynchronisation mit der Basisstation beim Arbeitsfrequenzpunkt; **dadurch gekennzeichnet, dass**:

das Erlangen von Abwärtsstreckensynchronisation mit der Basisstation beim Arbeitsfrequenzpunkt umfasst:

Festlegen (1) eines Bereichs von Abwärtsstrecken-Trainingssequenzzeitschlitzen durch Verwenden eines auf Trainingssequenzen beruhenden Leistungscharakteristik-Fensterwertverfahrens; und
Erlangen (2) der genauen Empfangsposition für die Teilnehmereinrichtung durch Berechnen der Korrelation empfangener Daten und der Trainingssequenz in dem Bereich;

wobei das auf Trainingssequenzen beruhende Leistungscharakteristik-Fensterwertverfahren umfasst:

Erhöhen der Sendeleistung von Synchronisationssymbolen in einem Abwärtsstrecken-Pilotsequenzzeitschlitz, DwPTS, eines Basisstationsdatenrahmens, wobei es auf geschützten Symbolen, die vor bzw. hinter den Synchronisationssymbolen im DwPTS liegen, keine Sendeleistung gibt; und
zuerst Suchen von Leistungscharakteristik-Fensterwerten des DwPTS durch die Teilnehmereinrichtung während des Empfangs, und nachdem ein Positionsbereich der Synchronisationssymbole ermittelt worden ist, Durchführen der Korrelationsberechnung nur in der Nähe der Position;

wobei das Suchen von Leistungscharakteristik-Fensterwerten des DwPTS, um einen Positionsbereich der Synchronisationssymbole zu ermitteln, umfasst:

zuerst Festhalten (6) eines Arbeitsfrequenzpunkrtes durch die Teilnehnereinrichtung und Empfangen eines Datenrahmens;
Berechnen (7) der Leistung jedes Synchronisationssymbols im DwPTS;
Berechnen (8) von Leistungscharakteristik-Fensterwerten an jeder Synchronisationssymbolposition;
Berechnen (9) eines durchschnittlichen Leistungscharakteristik-Fensterwerts über den gesamten Datenrahmen;
Suchen (10) des Minimums der Leistungscharakteristik-Fensterwerte an allen Synchronisationssymbolpositionen des Empfangsdatenrahmens;

Entscheiden (10), ob das Verhältnis des durchschnittlichen Leistungscharakteristik-Fensterwerts zum minimalen Leistungscharakteristik-Fensterwert größer als ein Schwellwert ist, und wenn ja, dann ist die Position des minimalen Leistungscharakteristik-Fensterwerts die Anfangsposition des DwPTS; und Lösen der Korrelation nahe der Anfangsposition, um einen genauen Empfangsanfangspunkt zu erlangen, und Beenden der Abwärtsstreckensynchzonisation;

wobei das Berechnen von Leistungscharakteristik-Fensterwerten an jeder Synchronisationssymbolposition umfasst:

Gleiten mit dem Symbolpegel auf dem Empfangsdatenrahmen und Berechnen jedes Leistungscharakteristik-Fensterwerts *R*(*i*) an jeder Position mit der folgenden Formel:

$$R_i = \left(\sum_{k=i}^{i+N-1} P(k) + \sum_{k=i+N+M}^{i+2N+M-1} P(k)\right) / \sum_{k=i+N}^{i+N+M-1} P(k),$$

wobei *i* eine wirkliche Empfangsposition darstellt, P(k) einen Leistungswert jedes Synchronisationssymbols darstellt, *N* und *M* Charakteristikfensterparameter sind.

**2.** Verfahren nach Anspruch 1, wobei das Berechnen jeder Synchronisationssymbolleistung umfasst:

zuerst Annehmen, dass der Empfangsmoment ein Synchronisationssymbolanfangspunkt ist, Addieren der Leistungen aller Chips, die zum Synchronisationssymbol gehören, und Erlangen der Leistung des Synchronisationssymbols.

**3.** Verfahren nach Anspruch 1, wobei das Berechnen von Leistungscharakteristik-Fensterwerten an jeder Synchronisationssymbolposition umfasst:

Gleiten mit dem Chippegel auf der Grundlage jeder Chipleistung und Berechnen des Leistungscharakteristik-Fensterwerts an jeder Position.

**4.** Verfahren nach Anspruch 1, ferner umfassend:

Verfolgen der Trägerabweichung zwischen der Teilnehmereinrichtung und der Basisstation durch die Teilnehmereinrichtung und Korrigieren der Trägerabweichung in einem digitalen Demodulator der Teilnehmereinrichtung;
wobei das Korrigieren der Trägerabweichung in einem digitalen Demodulator der Teilnehmereinrichtung umfasst:

Schätzen der Trägerabweichung durch Software und Nachregeln der Hardware durch Verwenden eines Entscheidungs- und Rückkopplungsverfahrens; und
durch Verwenden eines auf Verbunddetektion beruhenden Trägerabweichungskorrekturverfahrens erfolgendes Unterdrücken (3) von Mehrweg- und Mehrfachzugriffstörung und Korrigieren der Trägerabweichung auf einen durch die Basisbandmodulation benötigten Bereich.

**5.** Verfahren nach Anspruch 4, wobei das Schätzen der Trägerabweichung durch Software und Nachregeln der Hardware durch Verwenden eines Entscheidungs- und Rückkopplungsverfahrens umfasst:

Schätzen der Trägerabweichung jedes Datenrahmens durch Software;
Berechnen eines Nachregelwerts für die Hardware; und
Nachregeln der Hardware zur Automatischen Frequenzsteuerung, AFC, im digitalen Demodulator mit dem berechneten Nachregelwert.

**6.** Verfahren nach Anspruch 5, wobei folgende Formel verwendet wird, um die Trägerabweichung jedes Datenrahmens zu berechnen:

$$Ae^{-jk\alpha}\frac{1}{L}\sum_{L}[I(i)+jQ(i)]^{*}[I(i+K)+jQ(i+K)]^{*},$$

wobei $\alpha$ die geschätzte Frequenzabweichung darstellt, *I* und *Q* orthogonale Demodulationssignale sind und *L* eine statistische Länge ist.

**7.** Verfahren nach Anspruch 5, wobei folgende Formel verwendet wird, um einen Nachregelwert für die Hardware zu berechnen:

$$fa(n) = fe(n) * coef_k(n)$$

wobei $fe(n)$ die geschätzte Trägerfrequenzabweichung für den *n*-ten Empfangsdatenrahmen ist, der Bereich des Nachregelkoeffizienten $coef_k$ zwischen 0 und 1 liegt, und wenn *k* größer ist, ein kleinerer $coef_k$ ausgewählt wird.

**8.** Verfahren nach Anspruch 4, wobei das durch Verwenden eines auf Verbunddetektion beruhenden Trägerabweichungskorrekturverfahrens erfolgende Unterdrücken von Mehrweg- und Mehrfachzugriffstörung und Korrigieren der Trägerabweichung auf einen durch die Basisbandmodulation benötigten Bereich umfasst:

Einfügen einer Trainingssequenz-Mittambel von Datenbursts in jeden Datenrahmen zum Schätzen der wirklichen Kanalantwort;
durch die Teilnehmereinrichtung erfolgendes Unterdrücken von Mehrweg- und Mehrfachzugriffstörung mit Verbunddetektionstechnologie und Demodulierten von Symbolen nahe der Trainingssequenz-Mittambel;
Nachregeln der Hardware zur Automatischen Frequenzsteuerung mit der in diesen Symbolen eingeschlossenen Trägerabweichungsinformation.

**9.** Verfahren nach Anspruch 8, wobei das Unterdrücken von Mehrweg- und Mehrfachzugriffstörung mit Verbunddetektionstechnologie und Demodulieren von Symbolen nahe der Trainingssequenz-Mittambel umfasst:

Demodulieren von Empfangsdaten mit Verbunddetektionstechnologie und Erlangen von *P* Zeichen vor bzw. hinter der Trainingssequenz-Mittambel und Aufzeichnen als $X(1)$ ... $X(P)$ bzw. $Y(1)$ ... $Y(P)$;
Berechnen von $Xi(n) = X(n) \mid Xj(n)$ bzw. $Yi(n) = Y(n) \mid Yj(n)$, wobei $Xj(n) = Yj(n) = \pm\pi/4$ oder $\pm 3\pi/4$;
Erlangen der Richtung der Trägerabweichung durch die Formel:

$$Z = \sum_{n=1}^{P} Yi(n) / Xi(n);$$

Setzen einer Nachregelschrittweite der Hardware zur Automatischen Frequenzsteuerung auf der Grundlage der berechneten Richtung der Trägerfrequenzabweichung; und
Nachregeln der Hardware zur Automatischen Frequenzsteuerung mit der Nachregelschrittweite gemäß der Richtung der Trägerfrequenzabweichung.

**10.** Verfahren nach Anspruch 4, wobei das Schätzen der Trägerabweichung durch Software und Nachregeln der Hardware durch Verwenden eines Entscheidungs- und Rückkopplungsverfahrens umfasst:

a) Setzen (11) der Rahmennummer *n* = 0, Empfangen eines Datenrahmens;
b) Schätzen (12) der Trägerfrequenzabweichung des Datenrahmens durch Software;
c) Berechnen (13) eines Nachregelwerts der Trägerfrequenzabweichung, d.h. Berechnen des Hardware-Nachregelwerts;
d) Nachregeln (14) der Hardware zur Automatischen Frequenzsteuerung gemäß dem berechneten Hardware-Nachregelwert, Durchführen von *n* = *n*+1, Entscheiden, ob *n* größer als eine vorgegebene Anzahl von Nachregelrahmen *Q* ist, und wenn nicht, Empfangen des nächsten Datenrahmens und Gehen zu Schritt b, andernfalls Beenden.

**11.** Verfahren nach Anspruch 4 oder 10, wobei das durch Verwenden eines auf Verbunddetektion beruhenden Trägerabweichungskorrekturverfahrens erfolgende Unterdrücken von Mehrweg- und Mehrfachzugriffstörung und Korrigieren der Trägerabweichung auf einen durch die Basisbandmodulation benötigten Bereich umfasst:

e) Empfangen (15) von m Datenrahmen;
f) Demodulieren (16) der m empfangenen Datenrahmen mit Verbunddetektionstechnologie, d.h. Demodulieren von Datensymbolen nahe einer Trainingssequenz-Mittambel und Erlangen von *P* Zeichen vor bzw. hinter der Trainingssequenz-Mittambel;
g) Berechnen (17) der Richtung der Trägerfrequenzabweichung anhand der *P* Zeichen vor bzw. hinter der Trainingssequenz-Mittambel der *m* Datenrahmen;
h) Setzen (18) einer Nachregelschrittweite für die Hardware zur Automatischen Frequenzsteuerung gemäß der berechneten Richtung der Trägerfrequenzabweichung;
i) Nachregeln (19) der Hardware zur Automatischen Fzequenzsteuerung mit der Nachregelschrittweite gemäß der erlangten Richtung der Trägerfrequenzabweichung.

**12.** Verfahren nach Anspruch 11, ferner umfassend: Wiederholen der Schritte e bis i.

## Revendications

**1.** Procédé de recherche initiale de cellule dans un système de communication mobile numérique à accès multiple par répartition en code CDMA, pour un équipement d'utilisateur recevant des informations envoyées par une station de base, comprenant les étapes ci-dessous consistant à :

sélectionner un point de fréquence d'exploitation par le biais de l'équipement d'utilisateur et obtenir une synchronisation en liaison descendante avec la station de base au niveau du point de fréquence d'exploitation ; **caractérisé en ce que** :

l'étape consistant à obtenir une synchronisation en liaison descendante avec la station de base au niveau du point de fréquence d'exploitation comporte les étapes ci-dessous consistant à :

déterminer (1) une plage de tranche de temps de séquence d'apprentissage en liaison descendante en utilisant un procédé de calcul de valeur de fenêtre caractéristique de puissance basé sur une séquence d'apprentissage ; et
obtenir (2) une position de réception précise de l'équipement d'utilisateur en calculant une corrélation des données reçues et de la séquence d'apprentissage dans la plage ;

dans lequel le procédé de calcul de valeur de fenêtre caractéristique de puissance basé sur la séquence d'apprentissage comprend les étapes ci-dessous consistant à :

augmenter une puissance de transmission de symboles de synchronisation dans une tranche de temps de séquence pilote en liaison descendante, DwPTS, d'une trame de données de station de base, et **caractérisé en ce qu'**il n'existe pas de puissance de transmission sur des symboles protégés situés avant et après les symboles de synchronisation dans la tranche de temps DwPTS ; et
rechercher des valeurs de fenêtre caractéristique de puissance de la tranche de temps DwPTS dans un premier temps, par le biais de l'équipement d'utilisateur, durant la réception, et après avoir découvert une plage de position des symboles de synchronisation, mettre en oeuvre un calcul de corrélation uniquement à proximité de la position ;

dans lequel l'étape consistant à rechercher des valeurs de fenêtre caractéristique de puissance de la tranche de temps DwPTS en vue de découvrir une plage de position des symboles de synchronisation comprend les étapes ci-dessous consistant à :

verrouiller (6) un point de fréquence d'exploitation, par le biais de l'équipement d'utilisateur dans un premier temps, et recevoir une trame de données ;
calculer (7) chaque puissance de symbole de synchronisation dans la tranche de temps DwPTS ;
calculer (8) des valeurs de fenêtre caractéristique de puissance au niveau de chaque position de symbole de synchronisation ;
calculer (9) une valeur moyenne de fenêtre caractéristique de puissance sur la trame de données complète ;

rechercher (10) une valeur minimale parmi des valeurs de fenêtre caractéristique de puissance au niveau de toutes les positions de symboles de synchronisation de la trame de données de réception ;
déterminer (10) si le rapport entre la valeur moyenne de fenêtre caractéristique de puissance et la valeur minimale de fenêtre caractéristique de puissance est supérieur à une valeur seuil, et si tel est le cas, alors la position de la valeur minimale de fenêtre caractéristique de puissance est la position de début de la tranche de temps DwPTS ; et
résoudre une corrélation à proximité de la position de début en vue d'obtenir un point de départ de réception précis et mettre fin à la synchronisation en liaison descendante ;

dans lequel, l'étape consistant à calculer les valeurs de fenêtre caractéristique de puissance au niveau de chaque position de symbole de synchronisation comprend les étapes ci-dessous consistant à :

mettre en oeuvre un glissement avec un niveau de symbole sur la trame de données de réception, et calculer chaque valeur de fenêtre caractéristique de puissance, R(i), au niveau de chaque position à l'aide de la formule ci-dessous :

$$R_i = \left(\sum_{k=i}^{i+N-1} P(k) + \sum_{k=i+N+M}^{i+2N+M-1} P(k)\right) / \sum_{k=i+N}^{i+N+M-1} P(k),$$

où *i* représente une position de réception réelle, *P(k)* représente une valeur de puissance de chaque symbole de synchronisation, et *N* et *M* sont des paramètres de fenêtre caractéristique.

**2.** Procédé selon la revendication 1, dans lequel l'étape consistant à calculer chaque puissance de symbole de synchronisation comprend les étapes ci-dessous consistant à :

supposer dans un premier temps que l'instant de réception est un point de départ de symbole de synchronisation, ajouter les puissances de toutes les puces appartenant au symbole de synchronisation, et obtenir la puissance du symbole de synchronisation.

**3.** Procédé selon la revendication 1, dans lequel l'étape consistant à calculer les valeurs de fenêtre caractéristique de puissance au niveau de chaque position de symbole de synchronisation comprend les étapes ci-dessous consistant à :

mettre en oeuvre un glissement avec un niveau de puce sur la base de chaque puissance de puce, et calculer la valeur de fenêtre caractéristique de puissance au niveau de chaque position.

**4.** Procédé selon la revendication 1, comprenant en outre l'étape ci-dessous consistant à :

tracer un écart de porteuse entre l'équipement d'utilisateur et la station de base, par le biais de l'équipement d'utilisateur, et corriger l'écart de porteuse dans un démodulateur numérique de l'équipement d'utilisateur ;
dans lequel l'étape consistant à corriger l'écart de porteuse dans un démodulateur numérique de l'équipement d'utilisateur comprend les étapes ci-dessous consistant à :

estimer l'écart de porteuse par un moyen logiciel, et ajuster le matériel en utilisant un procédé de décision et de rétroaction ; et
en faisant appel à un procédé de correction d'écart de porteuse basé sur une détection conjointe, supprimer (3) un brouillage d'accès multiple et multi-chemin et corriger l'écart de porteuse vers une plage requise par la démodulation en bande de base.

**5.** Procédé selon la revendication 4, dans lequel l'étape consistant à estimer l'écart de porteuse par un moyen logiciel et à ajuster le matériel en utilisant un procédé de décision et de rétroaction comprend les étapes ci-dessous consistant à :

estimer l'écart de porteuse de chaque trame de données par un moyen logiciel ;
calculer une valeur d'ajustement pour le matériel ; et
ajuster un matériel de commande automatique de fréquence, AFC, dans le démodulateur numérique à l'aide de la valeur d'ajustement calculée.

**6.** Procédé selon la revendication 5, comportant l'étape consistant à utiliser la formule ci-dessous en vue d'estimer l'écart de porteuse de chaque trame de données :

$$Ae^{-jk\alpha}\frac{1}{L}\sum_{L}[I(i)+jQ(i)]^{*}[I(i+K)+jQ(i+K)]^{*},$$

où $\alpha$ représente l'écart de fréquence estimé, *I* et *Q* sont des signaux de démodulation orthogonale, et L est une longueur statistique.

**7.** Procédé selon la revendication 5, comportant l'étape consistant à utiliser la formule ci-dessous en vue de calculer une valeur d'ajustement pour le matériel :

$$fa(n) = fe(n) * coef_k(n),$$

où $fe(n)$ est l'écart de fréquence de porteuse estimé pour la $n^{ème}$ trame de données de réception, la plage de coefficient d'ajustement $coef_k$ se situe entre 0 et 1, et lorsque *k* est supérieur, il convient de sélectionner un coefficient d'ajustement $coef_k$ inférieur.

**8.** Procédé selon la revendication 4, dans lequel, les étapes consistant à utiliser un procédé de correction d'écart de porteuse basé sur une détection conjointe, à supprimer le brouillage d'accès multiple et multi-chemin, et à corriger l'écart de porteuse vers une plage requise par la démodulation en bande de base, comportent les étapes ci-dessous consistant à :

introduire un préambule intermédiaire de séquence d'apprentissage de salve de données dans chaque trame de données en vue d'estimer une réponse de canal réel ;
supprimer un brouillage d'accès multiple et multi-chemin au moyen d'une technologie de détection conjointe, par le biais de l'équipement d'utilisateur, et démoduler les symboles proches du préambule intermédiaire de séquence d'apprentissage ;
ajuster le matériel de commande automatique de fréquence à l'aide des informations d'écart de porteuse incluses dans ces symboles.

**9.** Procédé selon la revendication 8, dans lequel les étapes consistant à supprimer un brouillage d'accès multiple et multi-chemin au moyen d'une technologie de détection conjointe, et à démoduler les symboles proches du préambule intermédiaire de séquence d'apprentissage comporte les étapes ci-dessous consistant à :

démoduler des données de réception au moyen de la technologie de détection conjointe, et obtenir *P* caractères, avant et après le préambule intermédiaire de séquence d'apprentissage, lesquels sont enregistrés sous la forme $X(1) \ldots X(P)$ et $Y(1) \ldots Y(P)$, respectivement ;
calculer $Xi(n) = X(n) / Xj(n)$, $Yi(n) = Y(n) / Yj(n)$, respectivement, où $Xj(n) = Yj(n) = \pm\pi/4$ ou $\pm 3\pi/4$ ;
obtenir la direction d'écart de porteuse par le biais de la formule ci-dessous :

$$Z = \sum_{n=1}^{P} Yi(n) / Xi(n);$$

définir une longueur d'étape d'ajustement de matériel de commande automatique de fréquence sur la base de la direction d'écart de fréquence de porteuse calculée ; et
ajuster le matériel de commande automatique de fréquence avec la longueur d'étape d'ajustement selon la direction d'écart de fréquence de porteuse.

**10.** Procédé selon la revendication 4, dans lequel l'étape consistant à estimer l'écart de porteuse par le biais d'un moyen logiciel, et l'étape consistant à ajuster le matériel en faisant appel à un procédé de décision et de rétroaction, comportent les étapes ci-dessous consistant à :

a) définir (11) le nombre de trames sur n = 0 pour recevoir une trame de données ;

b) estimer (12) l'écart de fréquence de porteuse de la trame de données par le biais du moyen logiciel ;
c) calculer (13) une valeur d'ajustement de l'écart de fréquence de porteuse, c'est-à-dire calculer la valeur d'ajustement du matériel ;
d) ajuster (14) le matériel de commande automatique de fréquence selon la valeur d'ajustement du matériel calculée, appliquer $n = n + 1$, et déterminer si $n$ est supérieur à un nombre prédéfini de trames d'ajustement $Q$, si ce n'est pas le cas, recevoir la trame de données successive et passer à l'étape b, sinon mettre fin au processus.

**11.** Procédé selon la revendication 4 ou 10, dans lequel les étapes consistant à utiliser un procédé de correction d'écart de porteuse basé sur une détection conjointe, à supprimer le brouillage d'accès multiple et multi-chemin, et à corriger l'écart de porteuse vers une plage requise par la démodulation en bande de base, comportent les étapes ci-dessous consistant à :

e) recevoir (15) m trames de données ;
f) démoduler (16) les *m* trames de données reçues au moyen de la technologie de détection conjointe, à savoir démoduler les symboles de données proches d'un préambule intermédiaire de séquence d'apprentissage, et obtenir *P* symboles avant et après le préambule intermédiaire de séquence d'apprentissage, respectivement ;
g) calculer (17) la direction d'écart de fréquence de porteuse sur les *P* symboles avant et après le préambule intermédiaire de séquence d'apprentissage de *m* trames de données, respectivement ;
h) définir (18) une longueur d'étape d'ajustement pour le matériel de commande automatique de fréquence, selon la direction d'écart de fréquence de porteuse calculée ;
i) ajuster (19) le matériel de commande automatique de fréquence avec la longueur d'étape d'ajustement, selon la direction d'écart de porteuse de fréquence obtenue.

**12.** Procédé selon la revendication 11, comprenant en outre l'étape consistant à répéter les étapes e à i.

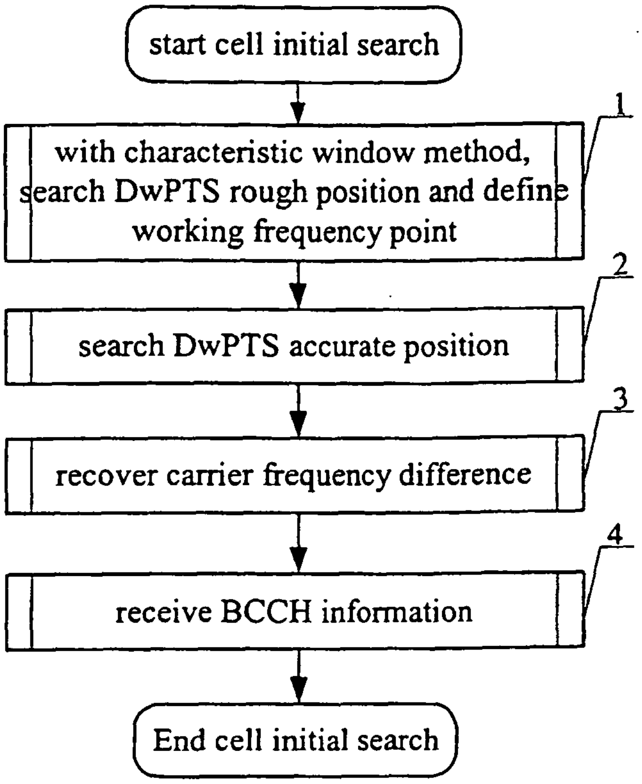
start cell initial search
with characteristic window method, search DwPTS rough position and define working frequency point
1
search DwPTS accurate position
2
recover carrier frequency difference
3
receive BCCH information
4
End cell initial search

Fig. 1

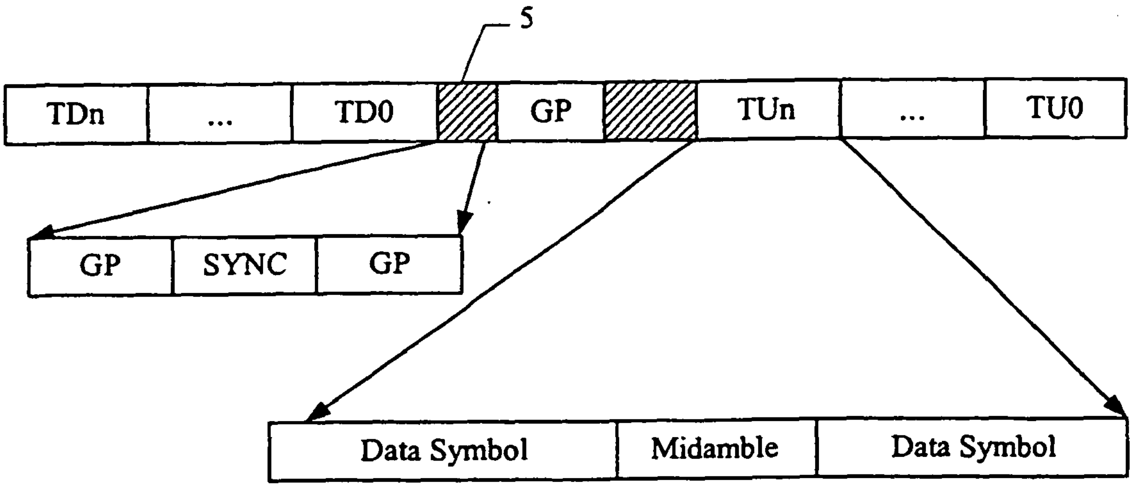
5
TDn
...
TD0
GP
TUn
...
TU0
GP
SYNC
GP
Data Symbol
Midamble
Data Symbol

Fig. 2

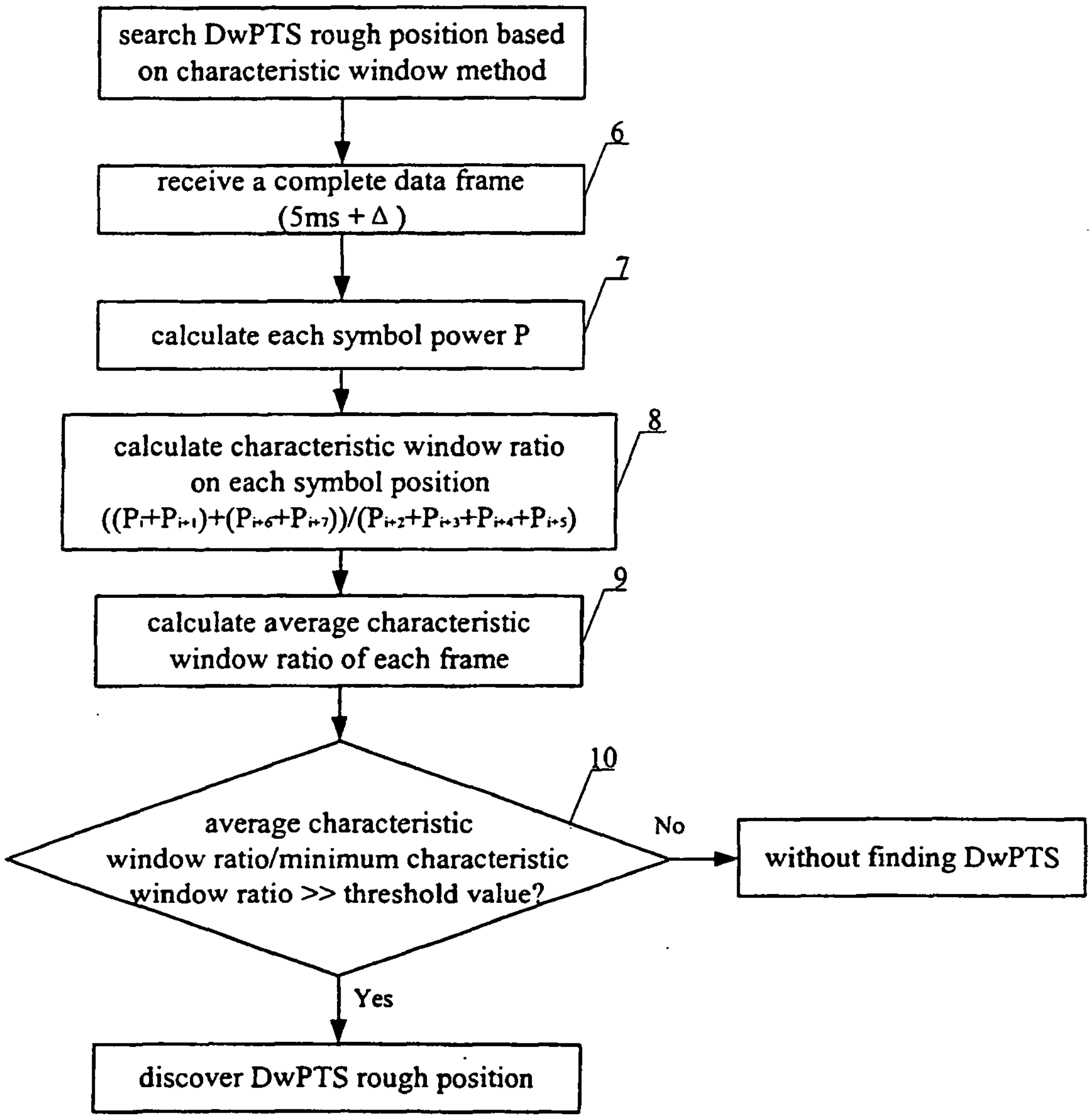
search DwPTS rough position based on characteristic window method
6
receive a complete data frame (5ms + Δ )
7
calculate each symbol power P
8
calculate characteristic window ratio on each symbol position ((Pi+Pi+1)+(Pi+6+Pi+7))/(Pi+2+Pi+3+Pi+4+Pi+5)
9
calculate average characteristic window ratio of each frame
10
average characteristic window ratio/minimum characteristic window ratio >> threshold value?
No
without finding DwPTS
Yes
discover DwPTS rough position

Fig. 3

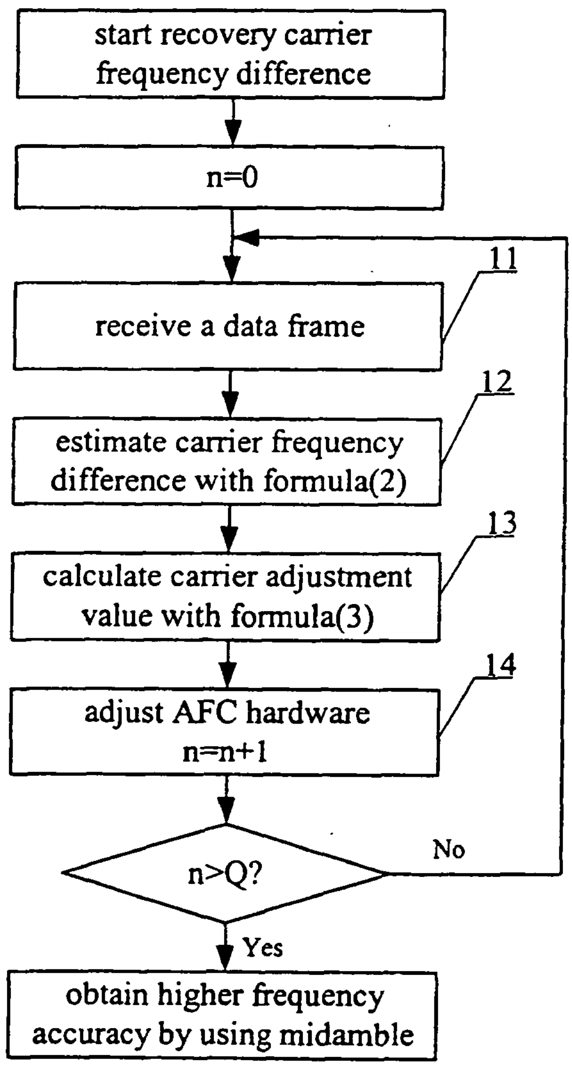
start recovery carrier frequency difference
n=0
11
receive a data frame
12
estimate carrier frequency difference with formula(2)
13
calculate carrier adjustment value with formula(3)
14
adjust AFC hardware n=n+1
n>Q?
No
Yes
obtain higher frequency accuracy by using midamble

Fig. 4

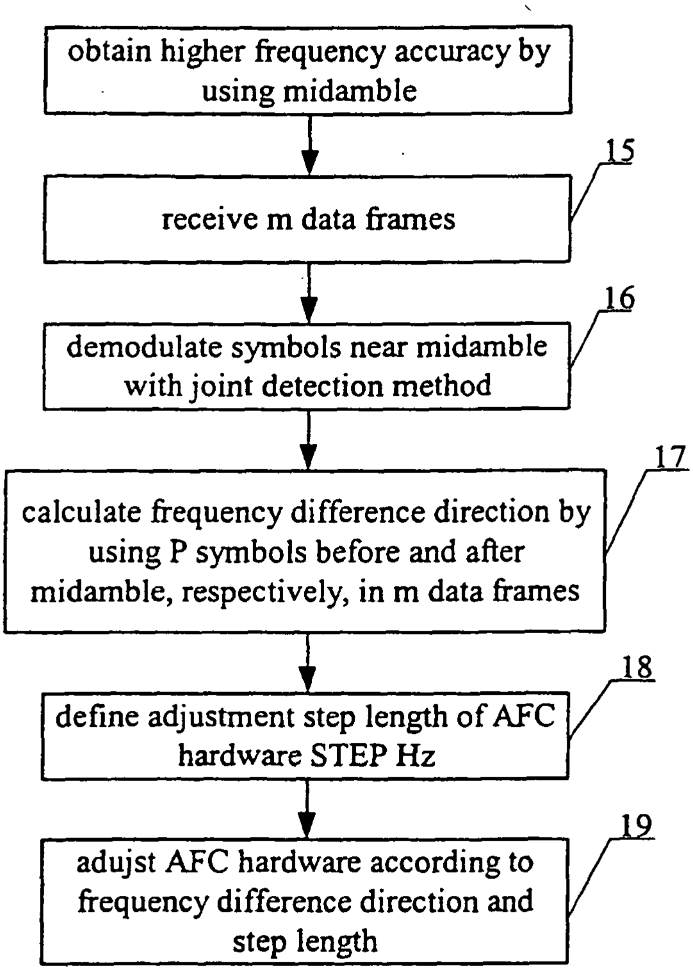
obtain higher frequency accuracy by using midamble
15
receive m data frames
16
demodulate symbols near midamble with joint detection method
17
calculate frequency difference direction by using P symbols before and after midamble, respectively, in m data frames
18
define adjustment step length of AFC hardware STEP Hz
19
adujst AFC hardware according to frequency difference direction and step length

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 97115151
- EP 0852430 A2